# EUROPÄISCHE PATENTSCHRIFT

(11) **EP 0 623 757 B1**
(45) Veröffentlichungstag und Bekanntmachung des Hinweises auf die Patenterteilung: **02.12.1998**
(21) Anmeldenummer: 94106460.2
(22) Anmeldetag: 26.04.1994
(51) Int. Cl.: F16B 5/07, F16B 2/08

(54) **Verbindungsanordnung mit wenigstens zwei Teilen**
Connecting system having at least two parts
Système de raccordement avec au moins deux parties

(30) Priorität: 03.05.1993 DE 4314489
(43) Veröffentlichungstag der Anmeldung: 09.11.1994
(73) Patentinhaber: Kautex Textron GmbH & Co. KG., 53229 Bonn (DE)
(72) Erfinder: Eulitz, Dirk, D 53115 Bonn (DE)
(74) Vertreter: Koepsell, Helmut, Dipl.-Ing.

(56) Entgegenhaltungen:
- DE-A- 2 139 091
- FR-A- 2 082 115
- GB-A- 1 221 829
- US-A- 2 936 980

## Beschreibung

Die Erfindung betrifft eine Verbindungsanordnung mit wenigstens zwei Teilen gemäß dem Oberbegriff des Anspruches 1.

Insbesondere bei Teilen aus Kunststoff besteht häufig die Notwendigkeit, diese auf einfache Weise miteinander zu verbinden derart, daß das eine Teil relativ durch eine Öffnung im anderen Teil gesteckt wird und am Ende der dabei auftretenden Relativverschiebung zwischen beiden Teilen, also in der relativen Endposition derselben, eine wenigstens in einer Richtung wirksame Rast- oder Schnappverbindung zustande kommt, bei der ein Formschluß entsteht, der ein Lösen dieser Verbindung verhindert. Derartige Verbindungen sind insbesondere dann zweckmäßig oder erforderlich, wenn sie in nur schwierig zugänglichen Bereichen hergestellt werden müssen. Dabei kann es sich beispielsweise um das Innere von Behältern, aber auch um schwierig zugängliche Stellen in Kraftfahrzeugen handeln, in denen irgendwelche Elemente eingebaut und Verbindungen hergestellt werden müssen. Dabei soll in jedem Fall, nicht zuletzt auch im Hinblick auf die mögliche schwierige Zugänglichkeit, die Rast- oder Schnappverbindung beim relativen Einstecken des einen Teils in das andere Teil, das zu diesem Zweck mit einer Öffnung versehen ist, selbsttätig zustande kommen, wobei während der Relativverschiebung zwischen beiden Teilen die Begrenzungen der Öffnung als Führung dienen können.

Derartige Steckverbindungen, bei denen der Formschluß zwischen beiden Teilen in der Verbindungsposition durch Einrasten oder Einschnappen bewirkt wird, sind an sich bekannt. Dies gilt insbesondere im Zusammenhang mit Teilen, die aus Kunststoff bestehen, da die Elemente, die beim Rast- oder Schnappverschluß miteinander zusammenwirken, im allgemeinen beim Herstellen von Kunststoffteilen einstückig an diesen angeformt werden können und somit keinen besonderen Aufwand erfordern. Zudem sind die Materialeigenschaften von Kunststoffen für derartige Rast- oder Schnappverbindungen vorteilhaft, da insbesondere thermoplastische Kunststoffe die dazu erforderliche elastische Verformbarkeit aufweisen.

Allerdings erfordern derartige Schnapp- oder Rastverschlüsse eine ziemlich genaue Positionierung der beiden miteinander zu verbindenden Teile in deren das Einschnappen oder Einrasten bewirkenden relativen Position jedenfalls dann, wenn dieser Verschluß nur in einer Richtung wirkt, während die Verhinderung einer relativen Bewegung in der anderen Richtung durch einen Anschlag bewirkt wird, der von einem anderen Bauteil getragen oder von diesem gebildet wird. In vielen Anwendungsfällen ist es schwierig, diese Voraussetzung zu erfüllen, da nicht immer in ausreichend genauer Weise vorherbestimmbar ist, wie weit das eine Teil in das andere Teil relativ einsteckbar ist, bevor beide Teile ihre relative Endposition erreichen, und ob genau in dieser, beispielsweise durch eine Wand oder ein anderes Bauteil bestimmten Endposition, das Einrasten oder Einschnappen erfolgt. Schwierigkeiten können sich dabei vor allem dann ergeben, wenn wenigstens eines der miteinander zu verbindenden Teile oder das andere Bauteil, durch welches die relative Endposition beider Teile bestimmt wird, aus Kunststoff besteht, weil insbesondere manche thermoplastischen Kunststoffe nach der Formgebung, insbesondere in der Abkühlphase, sich etwas verziehen oder durch andere Einflüsse gewisse Änderungen ihrer Gestalt erfahren können. Die durch diese nachträglichen Änderungen verursachten Toleranzen, die bezüglich Auftreten und Ausmaß nicht ohne weiters vorherbestimmbar sind, mögen zwar sehr gering sein. Sie sind jedoch häufig groß genug um zu bewirken, daß das Einrasten oder Einschnappen erfolgt, bevor das eine Teil relativ zum anderen Teil seine Soll-Endposition erreicht hat. Dies kann z. B. dazu führen, daß nach Herstellen der Verbindung zwischen beiden Teilen diese ein gewisses Spiel zulässt. Letzteres ist häufig auch dann unerwünscht, wenn die Dauerhaftigkeit der Verbindung dadurch nicht beeinträchtigt wird, da das Spiel, selbst wenn es sehr gering ist, beispielsweise bei Teilen, die in einem Kraftfahrzeug eingebaut sind, zu Klappergeräuschen führen kann. Allerdings wird in der Mehrzahl der Anwendungsfälle ohnehin gefordert, daß die Teile in verbundenem Zustand derart zusammenwirken, daß sie keine unkontrollierten Bewegungen ausführen können. Andererseits besteht bei Vorhandensein solcher Ungenauigkeiten auch die Möglichkeit, daß das Teil, dessen Endposition durch ein als Anschlag wirkendes drittes Bauteil bestimmt wird, diese Endposition bereits erreicht, bevor die Rast- oder Schnappverbindung wirksam werden kann, so daß überhaupt keine Verriegelung beider Teile zustande kommt.

Demzufolge liegt der Erfindung die Aufgabe zugrunde, eine Anordnung zum Verbinden zweier Teile gemäß dem Oberbegriff des Anspruches 1 so auszugestalten, daß die Einrast- oder Schnappverbindung durch einfaches relatives Einführen oder Einstecken des einen Teiles in die Öffnung des anderen Teiles zustande kommt, wobei eine Gewähr dafür vorhanden sein soll, daß das Einrasten oder Einschnappen in einer relativen Position beider Teile erfolgt, die der Soll-Endposition entspricht oder ihr zumindest möglichst nahekommt. Diese Soll-Endposition kann beispielsweise bestimmt werden durch eine Position, die eines der beiden Teile relativ zu einem dritten Teil einnimmt, welches als Anschlag wirkt. Dabei sollen die zusammenwirkenden Teile auch einfach herzustellen sein, so daß dazu kein besonderer Aufwand erforderlich ist.

Diese Aufgabe wird mit den im Kennzeichen des Anspruches 1 angegebenen Mitteln gelöst. Im wesentlichen geht es bei der Erfindung darum, daß ein Abschnitt des einen Teils in eine Öffnung des anderen Teils eingesteckt wird oder das mit der Öffnung versehene andere Teil über den Abschnitt des einen Teiles geführt wird und wenigstens eines der Teile mit mehreren, die Schnapp- oder Rastverbindung bewirkenden Vorsprüngen versehen ist, die in der Richtung, in welcher das relative Einstecken erfolgt, gegeneinander versetzt angeordent sind. Wenn das Ausmaß, um welches eines der beiden Teile beim Herstellen der Verbindung gegenüber dem jeweils anderen Teil vorgeschoben werden kann, bis es entweder an einen die Bewegung begrenzenden Anschlag an einem anderen Teil stößt oder aber aus anderen Gründen an einer Weiterbewegung gehindert wird, aufgrund der vorerwähnten Einflüsse nicht genau bestimmt werden kann, ist es nur erforderlich, die Grenzen zu kennen, innerhalb welcher die zu überbrückenden Ungenauigkeiten vorkommen können. Es wird dann in der Verbindungsposition der wenigstens eine Vorsprung zur Herstellung einer Rastverbindung wirksam, der der tasächlich sich einstellenden Endposition jeweils zugeordnet ist. Wenn z. B. die Soll-Endposition des einen der beiden miteinander zu verbindenden Teile durch ein drittes, z. B. als Anschlag wirkendes Teil bestimmt wird, hängt das ggf. verbleibende Spiel zwischen beiden Teilen nach Herstellung der Schnapp- oder Rastverbindung lediglich von der Größe der Abstände zwischen den zueinander in Einsteckrichtung versetzt angeordneten Verbindungselementen, also beispielsweise den Rastvorsprüngen, ab.

Es ist zwar sowohl aus FR-A-2082115 als auch GB-A-1221829 jeweils eine Ausführungsform bekannt, bei welcher ein langgestrecktes Band vorgesehen ist, das mit zwei einen Abstand voneinander aufweisenden Reihen von Rastvorsprüngen versehen ist, die parallel zu der Richtung, in welcher das relative Einführen des ersten Teiles erfolgt, gegeneinander versetzt angeordnet und derselben Öffnung des zweiten Teiles zugeordnet sind. Die Ausführung gemäß der Erfindung ermöglicht demgegenüber eine gedrängte, platzsparende Bauweise, die zudem unabhängig ist von der Ausführung des die Rastvorsprünge tragenden Teiles der Verbindungsanordnung.

Als besonders zweckmäßig, hat sich eine Ausgestaltung herausgestellt, bei welcher die die Rastvorsprünge tragenden wenigstens zwei Zähne einer Durchbrechung im Abschnitt des ersten Teils zugeordnet sind, welcher an die Öffnung am zweiten Teil angepaßt ist, wobei diese Durchbrechung von in Richtung der Relativverschiebung vorn und hinten liegenden Wandbereichen begrenzt ist und die Zähne von einem dieser Wandbereiche ausgehend sich im wesentlichen in Richtung auf den gegenüberliegenden Wandbereich erstrecken, ohne jedoch mit diesem verbunden zu sein. Diese Ausgestaltung gibt die Möglichkeit, an jedem Zahn einen Rastvorsprung vorzusehen oder jeden Zahn als Rastvorsprung auszubilden und dadurch das Ausmaß, um welches die Rastvorsprünge in Richtung der Relativverschiebung gegeneinander versetzt sind, so klein wie erforderlich zu wählen, ohne daß die Größe der Abstände durch irgendwelche konstruktiven Erfordernisse, Herstellungsbedingungen, Platzerfordernisse bei der Herstellung oder dgl. beeinflußt würde. Daneben kann der Rastversatz der nebeneinander liegenden Zähne bzw. der von diesen getragenen Rastvorsprünge wesentlich kleiner sein als z.B. die jeweilige konstruktiv erforderlichen Dimensionen der Zähne bzw. der Rastvorsprünge. Die nebeneinander befindlichen Zähne können geringe Abstände voneinander aufweisen. Es ist lediglich erforderlich, daß sie unabhängig voneinander elastisch verformbar sind.

In der Zeichnung sind einige Ausführungsbeispiele der Erfindung dargestellt. Es zeigen:
- Fig. 1: die Vorderansicht einer Halterung, welche zwei Gruppen von Rastvorsprüngen aufweist,
- Fig. 2: die zugehörige Seitenansicht,
- Fig. 3: einen Schnitt nach der Linie III-III der Fig. 2,
- Fig. 4: in Seitenansicht eine Einzelheit in größerem Maßstab,
- Fig. 5: die Vorderansicht einer Halterung mit nur einer Gruppe von Rastvorsprüngen mit darauf aufgestecktem zweiten Teil,
- Fig. 6: die zugehörige Seitenansicht,
- Fig. 7: im Schema eine dritte Ausführungsform, bei welcher die beiden miteinander zu verbindenden Teile Komponenten einer Baueinheit bilden, die als Halterung zum Halten und/oder Anbringen eines dritten Teils ausgebildet ist.

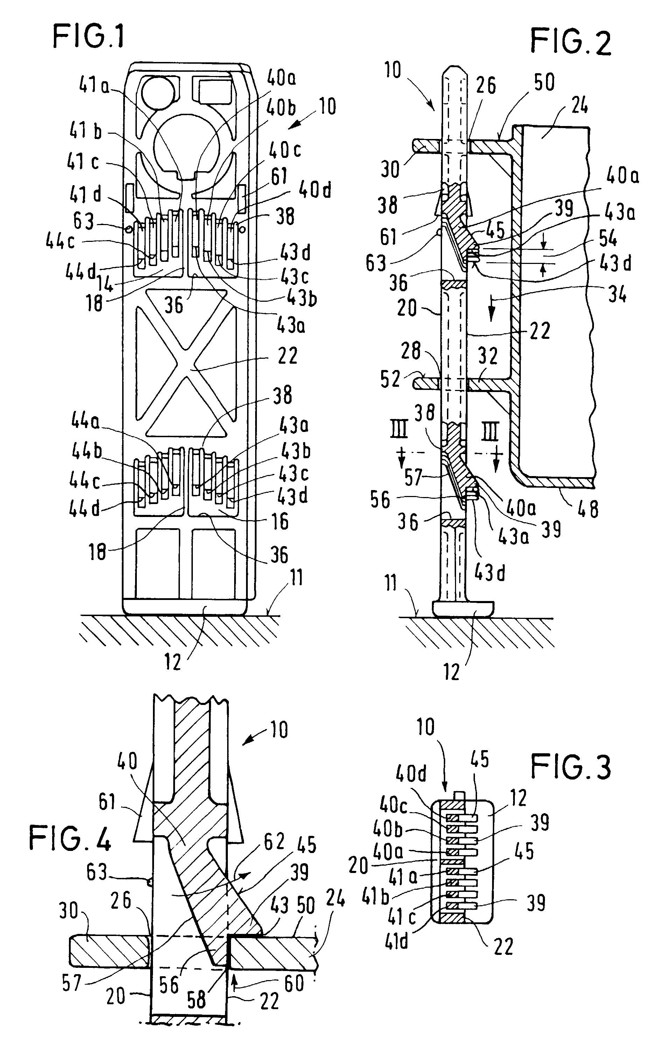

Das in den Fig. 1 - 3 dargestellte erste Teil ist eine leistenförmige Halterung 10, die aus thermoplastischem Kunststoff besteht. Sie kann beispielsweise durch Spritzgießen hergestellt werden. An ihrem einen Ende ist sie mit einer fußartigen Verbreiterung 12 versehen, die es ermöglicht, diese Halterung beispielsweise an der Wandung 11 eines Kunststoffbehälters anzuschweißen. Voraussetzung ist dafür, daß die Halterung 10 und die Wandung 11 oder ein anderes Bauteil, an welchem sie angeschweißt wird, zumindest im Verschweißungsbereich aus miteinander verschweißbaren Materialien, beispielsweise Polyäthylen, bestehen.

Die Halterung 10, die einen im wesentlichen rechteckigen Querschnitt aufweist, ist mit zwei Durchbrechungen 14, 16 versehen, von denen jede durch jeweils einen parallel zur Längsachse der Halterung 10 verlaufenden Steg 18 hälftig unterteilt ist. Die Längsachse jeder Durchbrechung 14, 16 verläuft im wesentlichen senkrecht zu den beiden Breitseiten 20, 22 der Halterung 10.

Jeder Durchbrechung sind Mittel zugeordnet, die dazu dienen, ein zweites Teil 24 an der Halterung 10 zu verriegeln. Bei diesem zweiten Teil kann es sich beispielsweise um einen topfartigen Behälter, aber auch um ein anderes Bauteil handeln. Von Bedeutung ist lediglich, daß das zweite Teil 24 mit wenigstens einer Durchbrechung 26 bzw. 28 versehen ist, deren Kontur an die Querschnittsform der Halterung 10 angepaßt ist, so daß die die beiden öffnungen 26, 28 aufweisenden Fortsätze 30, 32 des zweiten Teils 24 über die Halterung 10 gesteckt werden können, wie dies in Fig. 2 der Zeichnung angedeutet ist. In der Verbindungsposition der beiden Teile 10 und 24 wirken der Fortsatz 30 mit den der Durchbrechung 14 zugeordneten Verriegelungsmitteln und der Fortsatz 32 mit den der Durchbrechung 16 zugeordneten Verriegelungsmitteln zusammen.

Da beim Ausführungsbeispiel gemäß den Fig. 1 - 4 davon ausgegangen wird, daß die Halterung 10 mit der Wandung 11 eines Bauteils verbunden ist, wird normalerweise zur Herstellung der Verbindung zwischen den beiden Teilen 10 und 24 letzteres mit seinen Fortsätzen 30 und 32 in Richtung des Pfeiles 34 über die Halterung geschoben. Bei Vorliegen anderer Voraussetzungen besteht aber auch die Möglichkeit, die Halterung 10 in die Durchbrechung 26, 28 der Fortsätze 30 bzw. 32 des Teiles 24 einzustecken. Es ist ferner möglich, beide Teile 10 und 24 beim Herstellen der Verbindung absolut zu bewegen. Wie das Einführen der Halterung 10 in die Durchbrechung 26, 28 des Teiles 24 erfolgt, ist für die Herstellung der Verbindung und damit für die Anwendung der Erfindung gleichgültig, so daß überwiegend von relativem Einführen die Rede ist.

Die beiden Durchbrechungen 14 und 16 sind jeweils durch in Richtung des Pfeiles 34 vorn und hinten liegende Wandbereiche 36 bzw. 38 begrenzt, wobei sich von den in Pfeilrichtung 34 hinten liegenden Wandbereichen 38 kammartig angeordnete Zähne 40a-d und 41a-d schräg in Richtung auf den gegenüberliegenden Wandbereich 36 erstrecken, wie dies insbesondere die Fig. 1 und 2 erkennen lassen. Diese Zähne 40a-d bzw. 41a-d sind einstückig mit der Halterung 10 verbunden und der jeweiligen Durchbrechung 14 bzw. 16 jeweils paarweise zugeordnet derart, daß in jeder Hälfte der jeweiligen Durchbrechung vier derartiger Zähne 40a-d bzw. 41a-d vorhanden sind. Die Zähne jeder Durchbrechung 14 bzw. 16 sind gleich lang, jedoch am jeweiligen Wandbereich 38 der Halterung 10 stufenförmig in Längsrichtung derartig gegeneinander versetzt angeordnet, daß der dem mittleren Steg 18 jeweils unmittelbar benachbarte Zahn 40a den größten Abstand vom gegenüberliegenden Wandbereich 36 und der jeweils außenseitig befindliche Zahn 40d bzw. 41d den geringsten Abstand vom gegenüberliegenden Wandbereich 36 aufweist. Die dazwischen befindlichen Zähne sind so angeordnet, daß sich jeweils eine gleichmäßige Abstufung von der Mitte nach außen ergibt. Dabei sind die Zähne 40a-d beider Hälften der Durchbrechungen 36 zueinander spiegelbildlich angeordnet.

Insbesondere Fig. 2 läßt erkennen, daß sämtliche Zähne 40a-d ausgehend vom Wandbereich 38 derart schrägverlaufend angeordnet sind, daß sie mit ihren dem Wandbereich 36 bzw. dem Fuß 12 zugekehrten Endbereich über die Kontur der Halterung 10 an deren Breitseite 22 hinausragen. Jeder über die Kontur hinausragende Endbereich bildet so einen Vorsprung 39, der durch eine Stirnfläche 43a-d bzw. 44a-d begrenzt ist, die etwa senkrecht zur Längsachse der Halterung 10 und damit zur Pfeilrichtung 34 verläuft. Aufgrund der bereits erwähnten stufenförmigen Anordnung der Zähne 40a-d bzw. 41a-d sowie der Tatsache, daß sämtliche Zähne im wesentlichen gleich ausgebildet sind, ergibt sich eine Anordnung der Stirnflächen 43a-d bzw. 44a-d, bei welcher diese in Pfeilrichtung 34 gegeneinander versetzt angeordnet sind, wobei der Abstand der Stirnflächen 43a-d bzw. 44a-d in Richtung der Relativverschiebung 34 bei diesem Ausführungsbeispiel weniger als ein mm beträgt. Gleichzeitig sind die Stirnflächen entsprechend der Anordnung der Zähne 40a-d bzw. 41a-d auch quer zur Pfeilrichtung 34 bzw. der Längsachse der Halterung 10 gegeneinander versetzt.

Da die Halterung 10 einschließlich der damit einstückigen Zähne 40a-d und 41a-d aus thermoplastischem Kunststoff besteht, sind die Zähne elastisch verformbar. Dies ist erforderlich, da die Zähne mit ihrem jeweils die Stirnfläche 43a-d bzw. 44a-d hinausragenden Endabschnitt 39 auch über die Kontur der jeweiligen Öffnung 26 bzw. 28 hinausragen, wie dies Figur 2 erkennen läßt. Beide Öffnungen sind an die Querschnittsform der Halterung 10 angepasst, so daß die die Öffnungen 26 bzw. 28 begrenzenden Wandbereiche der Fortsätze 30 bzw. 32 bei der Relativverschiebung zwischen beiden Teilen 10, 24 eine Führungsfunktion haben. Figur 2 läßt ferner erkennen, daß bei einem weiteren Verschieben des Teiles 24 in Richtung des Pfeiles 34 die Fortsätze 30 und 32 in den Bereich der Zähne 40a-d bzw. 41a-d gelangen, wobei diese Zähne aufgrund der Tatsache, daß sie über die Kontur sowohl der Halterung 10 als auch der Kontur der beiden in den Fortsätzen 30 bzw. 32 vorhandenen im wesentlichen gleichen Öffnungen 26 bzw. 28 vorstehen, elastisch verformt werden, derart, daß sie zunächst etwas in den Bereich der jeweiligen Durchbrechung 14 bzw. 16 hinein verschwenkt werden. Dazu sind die Zähne an ihren über die Kontur vorstehenden Vorsprung 39 durch glatte Flächen 45 begrenzt, die unter einem spitzen Winkel zur Pfeilrichtung 34 verlaufen. Die die Öffnungen 26 und 28 begrenzenden Wandbereiche gleiten unter entsprechend zunehmender Verformung der Zähne an diesen Flächen 45 entlang. Um diese Verformung, die eine Art Verschwenkung des jeweiligen Zahnes etwa um den Verbindungsbereich zwischen diesem jedem Zahn und der Halterung 10 am Wandbereich 38 darstellt, zu erleichtern, sind die Zähne 40a-d bzw. 41a-d an ihrer der Breitseite 20 zugekehrten Seite ebenfalls jeweils durch eine schräg verlaufende Fläche 57 begrenzt, so daß innerhalb der durch die beiden Begrenzungsflächen 20 und 22 definierten Kontur der Halterung 10 Raum vorhanden ist, in den hinein die Zähne 40a-d bzw. 41a-d jeweils ausweichen können, wenn sie unter der Einwirkung des Fortsatzes 30 bzw. 31 in Richtung auf die Begrenzungsfläche der Breitseite 20 der Halterung 10, also in die jeweilige Durchbrechung hinein, elastisch verschwenkt werden.

Die Bewegung des Teiles 24 in Richtung des Pfeiles 34 findet ihr Ende in dem Augenblick, in welchem der dem Bauteil 11 zugewandte Boden 48 des Teiles 24 gegen die Wandung 11 stößt. Dies definiert die Endposition des Teiles 24, in welcher es durch die Zähne der Halterung 10 - und das Bauteil 11 - fixiert werden soll. Im Verlauf der Bewegung in Richtung des Pfeiles 34 passieren die Fortsätze 30 bzw. 32 zunächst die beiden Stirnflächen 43a bzw. 44a der jeweiligen Zahnpaare 40a bzw. 41a, worauf diese beiden Zahnpaare, sobald die oberseitigen Begrenzungsflächen 50 bzw. 52 der Fortsätze 30 bzw. 32 sich unterhalb der Stirnflächen 43a und 44a befinden, wieder aufgrund ihrer elastischen Rückstellkraft in die Ausgangsposition zurückschnellen, die in den Figuren 1 - 3 dargestellt ist. Wenn zu diesem Zeitpunkt der Boden 48 des Teiles 24 bereits in Berührung mit der Wandung 11 gelangt, ist die Bewegung des Teiles 24 in Richtung des Pfeiles 34 beendet, wobei es die beiden Zahnpaare 40a bzw. 41a sind, deren Stirnflächen 43a bzw. 44a mit der Oberflächen 50 bzw. 52 des jeweiligen Fortsatzes 30 bzw. 32 einen Formschluß bewirken, der es ausschließt, daß das Teil 24 wieder entgegen der Richtung des Pfeiles 34 bewegt und von der Halterung 10 gelöst werden kann. Im Ergebnis bilden somit die Endbereiche der beiden Zahnpaare 40a, 41a jeweils einen Rastvorsprung, der sich vor den zugehörigen Fortsatz 30 bzw. 32 legt und mit dessen Oberflächen 50 bzw. 52, die etwa parallel zu den Stirnflächen der Zähne verlaufen, in der beschriebenen Weise zusammenwirkt. Dies bedeutet, daß die übrigen Zahnpaare 40b bis 40d bzw. 41b bis 41d in ihrer elastisch verschwenkten Lage bleiben und somit für die Fixierung des Teiles 24 an der Halterung 10 unwirksam sind.

Falls zu dem beschriebenen Zeitpunkt, zu welchem im Zuge der Bewegung des Teils 24 in Richtung des Pfeiles 34 die Fortsätze 30 und 32 die Stirnflächenpaare 43a bzw. 44a passieren, der Boden 48 des Teiles 24 noch nicht gegen die als Anschlag wirkende Wandung 11 stößt, wird die Bewegung in Richtung des Pfeiles 34 fortgesetzt, wobei dann bei Erreichen der entsprechenden Positionen der Fortsätze 30 und 32 zunächst die Zahnpaare 40b, 41b in ihre wirksame Position gemäß den Figuren 1 bis 3 zurückschnellen und mit ihren Stirnfächen 43b bzw. 44b die oberseitige Begrenzung 50 bzw. 52 überlagern.

Wenn zu diesem Zeitpunkt das Teil 24 mit seinem Boden 48 immer noch nicht an der Wandung 11 anliegt, wird das Verschieben des Teiles 24 in Richtung des Pfeiles 34 fortgesetzt, wobei es von der Position der Fortsätze 30 und 32 relativ zur Halterung 10 zum Zeitpunkt des Anstoßens des Teiles 24 an der Wandung 11 abhängt, welches Zahnpaar den Formschluß bewirkt, der das Teil 24 in der dadurch definierten Verbindungsposition fixiert. Auf diese Weise wird in jedem Fall, unabhängig von der genauen Position der Wandung 11 in dem Bereich, in welchem der Boden 48 des Teiles 24 vor die Wandung 11 stößt, immer eine Verriegelung des Teiles 24 an der Halterung 10 und somit auch eine Fixierung des Teiles 24 relativ zur Wandung 11 erfolgen, wobei das Spiel, welches dann gegebenenfalls noch zwischen Wandung 11 und dem den Formschluß bewirkenden Zahnpaar bleibt, lediglich abhängt von den Abständen zwischen zwei in Richtung des Pfeiles 24 aufeinanderfolgenden Stirnflächen 43a-d bzw. 44a-d. Je kürzer diese Abstände sind, desto geringer ist das mögliche Spiel. Die Figuren 1 und 2, die die Halterung 10 etwa in wirklicher Größe zeigen, lassen erkennen, daß es aufgrund der Tatsache, daß jeder Zahn nur eine Stirnfläche aufweist, möglich ist, die Stirnflächen in Richtung des Pfeiles 34 in Abständen voneinander anzuordnen, die weniger als lmm betragen können, wobei aufgrund der kammartigen Anordnung der Zähne 40a-d bzw. 41a-d die Stirnflächen auch seitlich gegeneinander versetzt sind. Der Abstand 54 zwischen den beiden in Richtung des Pfeiles 34 extremen Stirnflächen 43a und 43b bzw. 44a und 44b bestimmt dabei den maximalen Abstand, innerhalb dessen Toleranzen ausgeglichen werden können. Hierbei ist zu berücksichtigen, daß diese Toleranzen nicht nur durch Abweichungen bezüglich der Position der Wandung 11 in dem Bereich, in welchem der Boden 48 des Teiles 24 mit der Wandung 11 in Berührung kommt, verursacht werden können. Derartige Toleranzen sind auch in Bezug auf das Teil 24 und somit in Bezug auf die Lage von dessen Boden 40 denkbar, und zwar insbesondere dann, wenn das Teil 24 aus thermoplastischem Kunststoff besteht. Deshalb kann es auch möglich sein, daß in der Endposition des Teiles 24 dessen oberer Fortsatz 30 mit den der Durchbrechung 14 zugeordneten Zähnen 40a und 41a bzw. deren Stirnflächen 43a und 44a den Formschluß bildet, wohingegen der untere Fortsatz 32 z.B. mit den der unteren Durchbrechung 16 zugeordneten Zähnen 40c bzw. 41c zusammenwirkt.

Jeder der Zähne 40a-d und 41a-d ist mit einer Verlängerung 56 versehen, die sich über die jeweilge Stirnfläche 43a-d bzw. 44a-d in Richtung auf den gegenüberliegenden Wandbereich 36 der jeweiligen Durchbrechung 14 bzw. 16 erstreckt, jedoch vor diesem Wandbereich endet. Figur 4 läßt erkennen, daß bei Anlage beispielsweise der Stirnfläche 43 des Zahnes 40 an der als Anschlag wirkenden oberen Begrenzungsfläche 50 des Fortsatzes 30 des Teiles 24 die Verlängerung 56 sich hinter die Begrenzungsfläche 58 der Öffnung 26 im Fortsatz 30 legt, so daß eine in Richtung des Pfeiles 60 auf den Fortsatz 30 und somit auf den Zahn 40 einwirkende Kraft eine elastische Verschwenkung des Zahnes 40 in Richtung des Pfeiles 62 nicht verursachen kann, da die Verlängerung 56 gegen die die Öffnung 26 begrenzende Wandung 58 stößt und so eine Verschwenkung in Richtung des Pfeiles 62, die zu einem Lösen des Formschlusses zwischen Fortsatz 30 bzw. dessen Oberfläche 50 und dem jeweiligen Zahn 40 führen könnte, verhindert wird. Diese Ausgestaltung macht es möglich, auch bei Verwendung von weichelastischen Kunststoffen für die zahnartigen Vorsprünge oder auch für das gesamte Teil 10 eine Verbindung zu bewirken, die bei normalen Beanspruchungen eine positionsstabile Anordnung der zusammenwirkenden Teile dauerhaft gewährleistet.

Die an den Breitseiten 20 und 22 der Halterung 10 angebrachten kleinen Vorsprünge 61 und 63 (Figur 1, 2 und 4) dienen dazu, beispielsweise das Teil 24 an der Halterung 10 in einer Zwischenposition zu halten, bevor das Teil 24 gegenüber der Halterung 10 relativ in die endgültige Position bewegt wird, in welcher es durch zwei Zahnpaare der Halterung 10 und die Wandung 11 in der Endposition fixiert ist. Die Anordnung des Teiles 24 in einer derartigen durch die Vorsprünge 61 und 63 definierten Zwischenposition kann z.B. dann zweckmäßig sein, wenn beide Teile 10 und 24 bereits miteinander verbunden werden sollen, bevor die Halterung 10 mit der Wandung 11 verschweißt wird. Dies kann insbesondere dann zweckmäßig sein, wenn es Schwierigkeiten bereitet, das Teil 24 auf die Halterung 10 aufzustecken, wenn letztere bereits ihre endgültige Position einnimmt. Es gibt auch andere Anwendungsfälle, bei denen es zweckmäßig, gegebenenfalls sogar erforderlich ist, die beiden Teile 10 und 24 zunächst dadurch vorläufig miteinander zu verbinden, daß das Teil 10 durch die beiden Öffnungen 26 und 28 der Fortsätze 30 und 32 gesteckt wird, bis der Fortsatz 30 eine Position zwischen den beiden Vorsprüngen 61 und 63 einnimmt, und das Teil 24 erst später in die endgültige Verbindungsposition verschoben wird. Die Vorsprünge 61 und 63 sind so ausgebildet und dimensioniert, daß der Fortsatz 30 des Teils 24 bei Anwendung einer geringen Kraft in Richtung des Pfeiles 34 über sie hinweggeschoben werden kann.

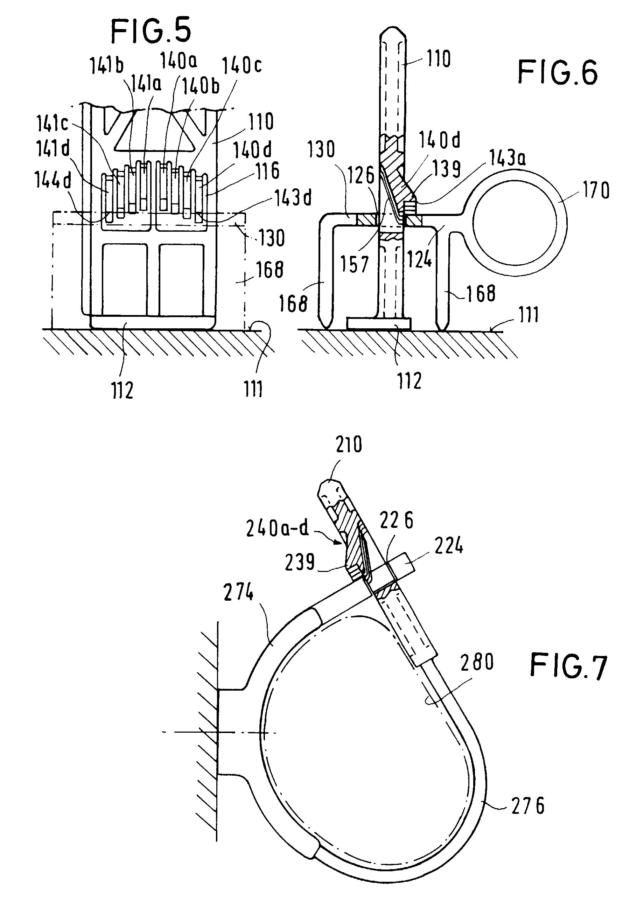

Das Ausführungsbeispiel gemäß den Figuren 5 und 6 entspricht in seinem grundsätzlichen Aufbau dem Ausführungsbeispiel gemäß den Figuren 1 bis 4, so daß für einander entsprechende Teile gleiche, um 100 höhere Bezugszeichen verwendet werden. Die Halterung 110 ist mit nur einer Ausnehmung 116 und einer Gruppe von Zähnen 140a-d und 141a-d versehen, die ebenfalls in den beiden Hälften der Durchbrechung 116 zueinander spiegelbildlich angeordnet sind. Auch hier ist die Halterung 110 mit einem Fuß 112 versehen, der mit der Wandung 111 eines Bauteiles verschweißt, gegebenenfalls auch verklebt ist. Das zweite Teil 124 besteht im wesentlichen aus einem mit einer Öffnung 126 versehenen Steg 130, der mit zwei Stützen 168 versehen ist, deren freien Enden in der Verbindungsposition der beiden Teile 110 und 124 auf der Wandung 111 aufsitzen. Das zweite Teil 124 dient zur Halterung von schlauch- oder rohrförmigen Bauteilen. Zu diesem Zweck ist es mit einem ringförmigen Stützteil 170 versehen, durch welches ein Schlauch oder Rohr hindurchgeführt werden kann. Die Anbringung des zweiten Teiles 124 an der Halterung 110 geschieht in der bereits im Zusammenhang mit dem Ausführungsbeispiel gemäß Figuren 1 - 4 beschriebenen Weise. Auch hier besteht die Möglichkeit, Toleranzen dadurch auszugleichen, daß mehrere in Längsrichtung der Halterung 110 gegeneinander versetzt angeordnete Rastvorsprünge mit Stirnflächen 143a-d vorhanden sind, die in Längsrichtung der Halterung 110 gegeneinander versetzt angeordnet sind. Die Oberseite des Steges 130, die als Anschlagfläche dient, wirkt beim Ausführungsbeispiel gemäß Figuren 5 und 6 in der Endposition des Teiles 124 mit dem Stirnflächen-Paar 143d und 144d zusammen. In diesem Fall nehmen sämtliche Zähne wieder ihre normale Lage ein, in welcher sie nicht elastisch verformt sind, da alle Stirnflächen sich oberhalb des Steges 130 befinden.

Das Ausführungsbeispiel gemäß Figur 7 stellt insofern eine Besonderheit dar, als hier die beiden Teile 210 und 224 Komponenten derselben Baueinheit 274 sind, die an der Wandung eines Bauteiles 276 abgebracht ist. Das Teil 210 ist in der üblichen Weise mit Zähnen 240a-d versehen, die in der bereits im Zusammenhang mit den Ausführungenbeispielen der Figuren 1 - 4 sowie 5 und 6 beschriebenen Weise ausgebildet und angeordnet sind. Die Halterung 210 wird relativ durch ein Loch 226 im zweiten Teil 224 geführt. Auch hier erfolgt das Zusammenwirken der Teile in der bereits beschriebenen Art und Weise. Das erste Teil 210 ist mit einem flexiblen Bauteil, beispielsweise einem Band 276 versehen, welches ebenfalls Teil der Baueinheit 274 ist und bei miteinander verbundenen Teilen 210 und 224 gemäß der Darstellung der Figur 7 beispielsweise zum Abstützen eines Schlauches oder dergleichen 280 dienen kann. Hier dient die durch die erfindungsgemäße Anordnung und Ausbildung der Zähne 240a-d erreichte Anpassbarkeit insbesondere dazu, der Verformbarkeit des Schlauches oder dergleichen 280 Rechnung zu tragen, wenn das Halteelement 276 um den Schlauch herum gelegt wird. Auch beim Ausführungsbeispiel gemäß den Figuren 6 und 7 kann es zweckmäßig sein, die Zähne paarweise anzuordnen, da dies jedenfalls bei der spiegelbildlichen Anordnung gemäß den Figuren 1 bis 6 zu einem symmetrischen Kraftangriff an beiden miteinander zu verbindenden Teilen führt.

Ob jeweils, wie beim Ausführungsbeispiel gemäß den Figuren 1 - 4, die Halterung 10 mit zwei Gruppen von Zähnen versehen ist, so daß das zweite Teil 24 an zwei Stellen fixiert ist, oder nur eine Gruppe von Zähnen analog den Ausführungsbeispielen gemäß den Figuren 5, 6 und 7 vorhanden ist, hängt von den jeweiligen Umständen, insbesondere vom jeweils erforderlichen Toleranzausgleich für das zu fixierende Teil 24 bzw. 124 oder ggf. des Bauteils 280 ab. Es ist darüberhinaus auch möglich, das jeweils zweite Teil durch zwei oder mehr Halterungen 10 zu fixieren. In diesem Fall wäre z. B. beim Ausführungsbeispiel gemäß den Figuren 1 - 4 das zweite Teil 24 noch mit weiteren Öffnungen 26 und 28 versehen, durch die eine zweite Halterung 10 relativ hindurchgeführt werden kann, um eine zusätzliche Abstützung und Befestigung des zweiten Teiles 24 zu bewirken.

Es ist auch abweichend von sämtlichen in der Zeichnung dargestellten Ausführungsbeispielen möglich, die Zähne zur Erzielung der abgestuften Anordnung der Stirnflächen ungleich lang auszubilden, so daß beispielsweise der die Durchbrechung 36 begrenzende Wandabschnitt 38 analog dem Wandabschnitt 36 im wesentlichen linear verlaufend ausgebildet ist. Allerdings haben Zähne gleicher Länge den Vorteil, daß alle Zähne die gleiche elastische Verformbarkeit aufweisen, ohne daß dazu besondere Maßnahmen, also beispielsweise unterschiedliche Dicke der Zähne oder dergleichen, erforderlich wären.

Es war bereits erwähnt worden, daß die beiden miteinander zu verbindenden Teile aus Kunststoff bestehen und somit bei entsprechender Formgebung leicht elastisch verformbar sind. Darüberhinaus ist es aber auch möglich, das jeweils zweite Teil aus einem anderen Material, beispielsweise einem Metall, herzustellen, da im allgemeinen die elastische Verformbarkeit der die Rastvorsprünge 39; 139; 239 tragenden Teile ausreicht, um das zweite Teil relativ zum ersten Teil über wenigstens einen der Rastvorsprünge zum Einrasten oder Einschnappen desselben zu führen.

Wenngleich bei den in der Zeichnung dargestellten Ausführungsbeispielen die Zähne bzw. Rastvorsprünge alle zur selben Seite des Teils 10, 110, 210 weisen, sind ohne weiteres auch Ausführungsformen anwendbar, bei denen eine Gruppe der Zähne bzw. Rastvorsprünge in Richtung auf die eine Seite und eine andere Gruppe von Zähnen oder Rastvorsprüngen in Richtung auf die andere Seite des Teils 10 usw. vorsteht. Dabei kann die Anordnung so getroffen sein, daß aufeinanderfolgende Zähne bzw. Rastvorsprünge jeweils alternierend zur einen oder anderen Seite vorstehen. Es ist auch möglich, beispielsweise beim Ausführungsbeispiel gemäß Fig. 1 und 2 die Zähne bzw. Rastvorsprünge der oberen Gruppe in die eine und die Zähne bzw. Rastvorsprünge der unteren Gruppe in die andere Richtung vorstehen zu lassen. Ferner können auch die Zähne bzw. Rastvorsprünge in der einen Hälfte der Durchbrechung 36 in eine Richtung weisen, die der Richtung der in der anderen Hälfte der Durchbrechung angeordneten Zähne bzw. Rastvorsprünge entgegengesetzt ist.

## Patentansprüche

1. Verbindungsanordnung mit wenigstens zwei Teilen (10, 24; 110, 124; 210, 224), von denen das erste Teil (10; 110; 210) mit wenigstens einem Abschnitt versehen ist, dessen Querschnitt an die Kontur wenigstens einer Öffnung (26, 28; 126; 226) am zweiten Teil (24; 124; 224) angepaßt ist, und zur Herstellung der Verbindung durch eine Relativverschiebung zwischen diesen beiden Teilen in diese Öffnung (26, 28; 126, 226; 226) relativ einführbar und mit Rastvorsprüngen (39; 139; 239) versehen ist, die in der Verbindungsposition beider Teile zur Herstellung eines Formschlusses zwischen denselben mit wenigstens einer Anschlagfläche (50, 52; 150) am zweiten Teil (24; 124; 224) zusammenwirken, wobei die Rastvorsprünge in ihrer die Verbindung bewirkenden Position jeweils über die Kontur der Öffnung am zweiten Teil (24; 124; 224) vorstehen und das erste Teil (10; 110; 210) mit wenigstens zwei elastisch verformbaren Rastvorsprüngen (39; 139; 239) versehen ist, die in Abständen parallel zu der Richtung, in welcher das relative Einführen des ersten Teiles erfolgt, gegeneinander versetzt angeordnet und derselben Öffnung (26, 28; 126; 226) des zweiten Teils zugeordnet sind, und die Abstände zwischen den Rastvorsprüngen (39; 139; 239) so gering sind, daß innerhalb des Toleranzbereiches der beiden Teile wenigstens zwei unterschiedliche Rastpositionen verfügbar sind, und die wenigstens zwei Rastvorsprünge (39; 139; 239) auch quer zur Richtung der Relativverschiebung gegeneinander versetzt angeordnet sind, **dadurch gekennzeichnet**, daß die Rastvorsprünge (39; 139; 239) von wenigstens zwei Zähnen (40a - d, 41a - d; 140a - d, 141a - d; 240a - d) getragen sind, die kammartig quer zur Richtung der Relativverschiebung angeordnet sind.

2. Anordnung nach Anspruch 1, **dadurch gekennzeichnet**, daß die Anschlagfläche(n) (50, 52; 150) am zweiten Teil (24; 124; 224) durch ein die Öffnung begrenzendes Wandteil (30, 32) des zweiten Teiles gebildet wird bzw. werden.

3. Anordnung nach Anspruch 1, **dadurch gekennzeichnet**, daß die die Rastvorsprünge (39; 139; 239) tragenden wenigstens zwei Zähne (40a - d, 41a - d; 140a - d, 141a - d; 240a - d) einer Durchbrechung (14, 16; 116) im Abschnitt des ersten Teiles (10; 110, 210) zugeordnet sind, welche an die Öffnung (26, 28; 126; 226) am zweiten Teil (24; 124; 224) angepaßt ist, und diese Durchbrechng von in Richtung der Relativverschiebung vorn und hinten liegenden Wandbereichen (36, 38) begrenzt ist und die Zähne (40a - d, 41a - d; 140a - d; 141a - d; 240a - d) von einem (38) dieser Wandbereiche ausgehend sich im wesentlichen in Richtung auf den gegenüberliegenden Wandbereich erstrecken.

4. Anordnung nach Anspruch 1, dadurch gekennzeichnet, daß die Begrenzungsflächen (45) der Zähne (40a - d; 41a - d; 140a - d; 141a - d; 240a - d) an der Seite des ersten Teils (10; 110; 210), an welcher die Rastvorsprünge (39; 139; 239) sich befinden, derart gegenüber der Richtung der Relativverschiebung schräg verlaufend angeordnet sind, daß sie in Richtung auf die Rastvorsprünge zunehmend gegenüber der Kontur des ersten Teiles vorstehen.

5. Anordnung nach Anspruch 1, dadurch gekennzeichnet, daß die Dicke der Zähne (40a - d; 41a - d; 140a - d; 141a - d; 240a - d) in Richtung der Achse der zugehörigen Durchbrechung (14, 16; 116) zumindest nicht wesentlich größer ist als die Dicke des die Durchbrechung aufweisenden Abschnitts des ersten Teils (10; 110; 210).

6. Anordnung nach Anspruch 1, dadurch gekennzeichnet, daß die Begrenzungsflächen (57; 157) der Zähne (40a - d; 41a - d, 140a - d, 141a - d) an der zweiten Seite (20) des ersten Teils (10; 110, 210), die den Rastvorsprüngen (39; 139; 239) abgekehrt ist, in unverformtem Zustand schräg verlaufen derart, daß in Richtung auf das freie Ende des jeweiligen Zahnes dessen Abstand von der Kontur des ersten Teiles an dessen zweiter Seite (20) zunimmt.

7. Anordnung nach Anspruch 1, dadurch gekennzeichnet, daß die einzelnen Zähne (40a - d; 41a - d; 140a - d; 141a - d; 240a - d) gleich lang ausgebildet sind und entsprechend den Abständen, in welchen die von ihnen getragenen Rastvorsprünge (39; 139; 239) parallel zu der Richtung, in welcher die Relativverschiebung zwischen beiden Teilen (10, 24; 110, 124; 210, 224) erfolgt, gegeneinander versetzt mit der sie tragenden Begrenzungswandung (38) verbunden sind.

8. Anordnung nach Anspruch 1, dadurch gekennzeichnet, daß jeder Zahn (40a - d; 41a - d; 140a - d; 141a - d; 240a - d) an seinem freien Ende an seiner dem Rastvorsprung (39; 139; 239) abgekehrten Seite mit einer im wesentlichen in Längsrichtung des Zahnes sich erstreckenden Verlängerung (56) versehen ist, die in der Verbindungsposition beider Teile (10, 24; 110, 124; 210, 224) das zweite Teil (24; 124;, 224) hintergreift.

9. Anordnung nach Anspruch 8, dadurch gekennzeichnet, daß die dem Rastvorsprung (39; 139; 239) zugekehrte Begrenzungsfläche der Verlängerung (56) im wesentlichen in der Ebene liegt, in welcher die Kontur des die Zähne tragenden Abschnittes des ersten Teiles (10; 110; 210) an der zugeordneten Breitseite (22) der Halterung verläuft.

10. Anordnung nach Anspruch 1, dadurch gekennzeichnet, daß die Zähne (40a - d; 41a - d; 140a - d; 141a - d) paarweise angeordnet sind derart, daß die Rastvorsprünge (39; 139; 239) eines Zahnpaares (40a; 41a; 140a; 141a) gleichzeitig zur Herstellung der Verbindung zwischen den beiden Teilen (10, 24, 110, 124; 210, 224) wirksam sind.

11. Anordnung nach Anspruch 10, dadurch gekennzeichnet, daß innerhalb des Bereiches einer Durchbrechung (14, 16; 116) jeweils wenigstens zwei Zähne (40a - d; 41a - d; 140a - d; 141a - d) angeordnet sind, deren Rastvorsprünge (29, 139, 239) in der Verbindungsposition beider Teile (10, 24; 110, 124; 210, 224) mit der Anschlagfläche (50, 52; 142) des zweiten Teiles (24; 124) zusammenwirken.

12. Anordnung nach Anspruch 11, dadurch gekennzeichnet, daß die Durchbrechung (14, 16; 116) in Richtung der Relativverschiebung zwischen beiden Teilen (10, 24; 110, 124; 210, 224) hälftig unterteilt ist und in beiden Hälften eine Gruppe von Zähnen (40a - d; 140a - d) vorgesehen ist, die den Zähnen (41a - d; 141a - d) der anderen Gruppe entsprechen und zu diesen spiegelbildlich angeordnet sind.

13. Anordnung nach Anspruch 1, dadurch gekennzeichnet, daß erstes Teil (210) und zweites Teil (224) Komponenten einer Baueinheit (274) sind, die zur Befestigung und/oder Halterung dritter Teile (280) dient.

## Claims

1. A connecting arrangement comprising at least two parts (10, 24; 110, 124; 210, 224) of which the first part (10; 110; 210) is provided with at least one portion whose cross-section is adapted to the contour of at least one opening (26, 28; 126; 226) on the second part (24; 124; 224) and to make the connection can be relatively introduced into said opening (26, 28; 126; 226) by a relative displacement between said two parts and is provided with retaining projections (39; 139; 239) which in the connected position of the two parts co-operate with at least one abutment surface (50; 52; 150) on the second part (24; 124; 224) to produce a positively locking connection between the parts, wherein in their position of making the connection the retaining projections respectively project beyond the contour of the opening on the second part (24; 124; 224) and the first part (10; 110; 210) is provided with at least two elastically deformable retaining projections (39; 139; 239) which are arranged in mutually displaced relationship at spacings parallel to the direction in which relative insertion of the first part occurs and are associated with the same opening (26, 28; 126: 226) of the second part, and the spacings between the retaining projections (39; 139; 239) are so small that at least two different retaining positions are available within the tolerance range of the two parts, and the at least two retaining projections (39; 139; 239) are also arranged in mutually displaced relationship transversely to the direction of the relative displacement, characterised in that the retaining projections (39; 139; 239) are carried by at least two teeth (40a-d, 41a-d; 140a-d, 141a-d; 240a-d) which are arranged comb-like transversely to the direction of the relative displacement.

2. An arrangement according to claim 1 characterised in that the abutment surface or surfaces (50; 52; 150) is or are formed on the second part (24; 124; 224) by a wall portion (30, 32) of the second part, said wall portion adjoining the opening.

3. An arrangement according to claim 1 characterised in that the at least two teeth (40a-d; 41a-d; 140a-d; 141a-d; 240a-d) carrying the retaining projections (39; 139; 239) are associated with an aperture (14; 16; 116) in the portion of the first part (10; 110; 210), which is adapted to the opening (26, 28; 126; 226) on the second part (24; 124; 224), and said aperture is defined by wall regions (36, 38) disposed at the front and at the rear in the direction of the relative displacement and the teeth (40a-d, 41a-d; 140a-d, 141a-d; 240a-d) extend from one (38) of said wall regions substantially towards the oppositely disposed wall region.

4. An arrangement according to claim 1 characterised in that the boundary surfaces (45) of the teeth (40a-d; 41a-d; 140a-d; 141a-d; 240a-d) at the side of said first part (10; 110; 210) at which the retaining projections (39; 139; 239) are disposed are arranged to extend inclinedly relative to the direction of relative displacement in such a way that in a direction towards the retaining projections they increasingly project relative to the contour of the first part.

5. An arrangement according to claim 1 characterised in that the thickness of the teeth (40a-d; 41a-d; 140a-d;141a-d; 240a-d) in the direction of the axis of the associated aperture (14, 16; 116) is at least not substantially greater than the thickness of the portion of the first part (10; 110; 210), which has the aperture.

6. An arrangement according to claim 1 characterised in that the boundary faces (57; 157) of the teeth (40a-d; 41a-d; 140a-d; 141a-d) at the second side (20) of the first part (10; 110; 210) which is remote from the retaining projections (39; 139; 239) extend inclinedly in a non-deformed condition in such a way that towards the free end of the respective tooth the spacing thereof from the contour of the first part at the second side (20) thereof increases.

7. An arrangement according to claim 1 characterised in that the individual teeth (40a-d; 41a-d; 140a-d; 141a-d; 240a-d) are of the same length and are connected to the boundary wall (38) bearing same, in mutually displaced relationship parallel to the direction in which the relative displacement between the two parts (10, 24; 110, 124; 210, 224) occurs in accordance with the spacings at which the retaining projections (39; 139; 239) carried thereby are arranged.

8. An arrangement according to claim 1 characterised in that each tooth (40a-d; 41a-d; 140a-d; 141a-d; 240a-d) is provided at its free end at its side remote from the retaining projection (39; 139; 239) with a prolongation portion (56) which extends substantially in the longitudinal direction of the tooth and which engages behind the second part (24; 124; 224) in the connected position of the two parts (10, 24; 110, 124; 210, 224).

9. An arrangement according to claim 8 characterised in that the boundary surface of the prolongation portion (56) which is towards the retaining projection (39; 139; 239) is disposed substantially in the plane in which the contour of the portion of the first part (10; 110; 210), which carries the teeth, extends at the associated wide side (22) of the holder means.

10. An arrangement according to claim 1 characterised in that the teeth (40a-d; 41a-d; 140a-d; 141a-d) are arranged in pairs in such a way that the retaining projections (39; 139; 239) of a pair of teeth (40a; 41a; 140a; 141a) are simultaneously operative to make the connection between the two parts (10, 24; 110, 124; 210, 224).

11. An arrangement according to claim 10 characterised in that arranged within the region of a respective aperture (14, 16; 116) are at least two teeth (40a-d; 41a-d; 140a-d, 141a-d) whose retaining projections (29, 139, 239) co-operate with the abutment surface (50, 52; 142) of the second part (24, 124) in the connected position of the two parts (10, 24; 110, 124; 210, 224).

12. An arrangement according to claim 11 characterised in that the aperture (14, 16; 116) is divided in half in the direction of the relative displacement between the two parts and provided in bath halves is a group of teeth (40a-d; 140a-d) which correspond to the teeth (41a-d; 141a-d) of the other group and which are arranged in mirror-image relationship with same.

13. An arrangement according to claim 1 characterised in that the first part (210) and the second part (224) are components of a structural unit (274) which serves for fixing and/or holding third parts (280).

## Revendications

1. Dispositif d'assemblage comprenant au moins deux parties (10, 24 ; 110, 124 ; 210, 224), parmi lesquelles la première partie (10 ; 110 ; 210) est munie d'au moins une portion, dont la section est adaptée au contour d'au moins un orifice (26, 28 ; 126 ; 226) réalisé dans la deuxième partie (24 ; 124 ; 224) et peut être introduite dans ledit orifice (26, 28 ; 126 ; 226) par un mouvement relatif entre lesdites deux parties pour réaliser l'assemblage, et est munie de saillies à encliqueter (39 ; 139 ; 239) qui, en position d'assemblage des deux parties, agissent conjointement avec au moins une surface de butée (50, 52 ; 150), réalisée sur la deuxième partie (24 ; 124 ; 224), pour former un assemblage par conjugaison de forme, dans lequel dispositif chaque saillie à encliqueter s'avance en saillie, dans la position d'assemblage, au-delà du contour de chaque orifice sur la deuxième partie (24 ; 124 ; 224), et la première partie (10 ; 110 ; 210) est munie d'au moins deux saillies à encliqueter (39; 139 ; 239), élastiquement déformables, qui sont écartées les unes des autres et parallèles au sens du mouvement relatif d'introduction de la première partie et correspondent au même orifice (26, 28 ; 126 ; 226) de la deuxième partie, et les distances entre les saillies à encliqueter (39 ; 139 ; 239) sont faibles, de manière à définir au moins deux positions d'encliquetage différentes à l'intérieur du domaine de tolérance des deux parties, et les saillies à encliqueter (39 ; 139 ; 239), au moins au nombre de deux, sont disposées transversalement au sens du mouvement relatif de l'une par rapport à l'autre, caractérisé en ce que les saillies à encliqueter (39 ; 139 ; 239) reposent sur au moins deux dents (40a-d, 41a-d ; 140a-d, 141a-d ; 240a-d), qui sont disposées en forme de peigne, transversalement par rapport au sens du mouvement relatif.

2. Dispositif selon la revendication 1, caractérisé en ce que la/les surface(s) de butée (50, 52 ; 150), réalisée(s) sur la deuxième partie (24 ; 124 ; 224) est ou sont formées par une portion de paroi (30, 32) de la deuxième partie, délimitant l'orifice.

3. Dispositif selon la revendication 1, caractérisé en ce que les dents (40a-d, 41a-d ; 140a-d, 141a-d ; 240a-d), au moins au nombre de deux et supportant les saillies à encliqueter (39 ; 139 ; 239), correspondent à un passage (14, 16 ; 116) dans la portion de la première partie (10 ; 110 ; 210), qui est adaptée à l'orifice (26, 28 ; 126 ; 226) réalisé dans la deuxième partie (24 ; 124 ; 224), et ledit passage est délimité dans le sens du mouvement relatif par des parois (36, 38) situées à l'avant et à l'arrière et les dents (40a-d, 41a-d ; 140a-d, 141a-d ; 240a-d) s'étendent à partir de l'une (38) desdites parois sensiblement en direction de la paroi opposée.

4. Dispositif selon la revendication 1, caractérisé en ce que les surfaces périphériques (45) des dents (40a-d, 41a-d ;140a-d, 141a-d ; 240a-d) sont disposées sur le côté de la première partie (10 ; 110 ; 210), sur lequel sont situées les saillies à encliqueter (39 ; 139 ; 239), en position inclinée par rapport au sens du mouvement relatif, de telle sorte que lesdites dents s'avancent en devenant de plus en plus longues, par rapport au contour de la première partie, vers les saillies à encliqueter.

5. Dispositif selon la revendication 1, caractérisé en ce que l'épaisseur des dents (40a-d, 41a-d ; 140a-d, 141a-d ; 240a-d), dans le sens de l'axe du passage (14, 16 ; 116) correspondant, n'est au moins pas sensiblement supérieure à l'épaisseur de la portion de la première partie (10 ; 110 ; 210) munie du passage.

6. Dispositif selon la revendication 1, caractérisé en ce que les surfaces périphériques (57 ; 157) des dents (40a-d, 41a-d ; 140a-d, 141a-d ; 240a-d) sur le deuxième côté (20) de la première partie (10 ; 110 ; 210), qui est opposé aux saillies à encliqueter (39 ; 139 ; 239), s'étendent en position inclinée à l'état non déformé, de telle sorte que la distance entre chaque dent et le contour de la première partie, sur le deuxième côté (20) de celle-ci, augmente en direction de l'extrémité libre de chaque dent.

7. Dispositif selon la revendication 1, caractérisé en ce que les différentes dents (40a-d, 41a-d ; 140a-d, 141a-d ; 240a-d) ont la même longueur et sont assemblées, décalées les unes par rapport aux autres, avec la paroi de limitation (38) qui les porte, conformément aux distances, dans lesquelles se déplacent les saillies à encliqueter (39 ; 139 ; 239) supportées par lesdites dents, parallèlement au sens dans lequel se produit le mouvement relatif entre les deux parties (10, 24 ; 110, 124 ; 210, 224).

8. Dispositif selon la revendication 1, caractérisé en ce que chaque dent (40a-d, 41a-d ; 140a-d, 141a-d ; 240a-d) est munie, sur son extrémité libre, sur le côté opposé à la saillie à encliqueter (39 ; 139 ; 239), d'un épaulement (56) qui s'étend sensiblement dans le sens longitudinal de la dent, lequel épaulement, dans la position d'assemblage des deux parties (10, 24 ; 110, 124 ; 210, 224), s'engage derrière la deuxième partie (24 ; 124 ; 224).

9. Dispositif selon la revendication 8, caractérisé en ce que la surface périphérique de l'épaulement (56), orientée vers la saillie à encliqueter (39 ; 139 ; 239), se situe sensiblement dans le plan dans lequel s'étend le contour de la portion de la première partie (10 ; 110 ; 210) portant les dents, au niveau du côté large (22) correspondant du support.

10. Dispositif selon la revendication 1, caractérisé en ce que les dents (40a-d, 41a-d ; 140a-d, 141a-d ; 240a-d) sont disposées par paire, de telle sorte que les saillies à encliqueter (39 ; 139 ; 239) d'une paire de dents (40a ; 41a ; 140a ; 141a) agissent simultanément pour réaliser l'assemblage entre les deux parties (10, 24 ; 110, 124 ; 210, 224).

11. Dispositif selon la revendication 10, caractérisé en ce que, à l'intérieur de la zone d'un passage (14, 16 ; 116), sont disposées respectivement deux dents (40a-d, 41a-d ; 140a-d, 141a-d ; 240a-d), dont les saillies à encliqueter (39 ; 139 ; 239), dans la position d'assemblage des deux parties (10, 24 ; 110, 124 ; 210, 224), agissent conjointement avec la surface de butée (50, 52 ; 142) de la deuxième partie (24 ; 124 ; 224).

12. Dispositif selon la revendication 11, caractérisé en ce que le passage (14, 16 ; 116) est partagé en deux parties égales dans le sens du mouvement relatif entre les deux parties (10, 24 ; 110, 124 ; 210, 224) et il est prévu de réaliser dans chacune des deux moitiés un groupe de dents (40a-d, 140a-d), qui correspondent aux dents (41a-d ; 141a-d) des autres groupes et sont disposés symétriquement par rapport à ces derniers.

13. Dispositif selon la revendication 1, caractérisé en ce que la première partie (210) et la deuxième partie (224) constituent les modules d'une unité (274), destinée à fixer et/ou supporter une troisième partie (280).
